# EUROPÄISCHE PATENTANMELDUNG

(11) **EP 1 426 504 A2**
(43) Veröffentlichungstag der Anmeldung: **09.06.2004**
(21) Anmeldenummer: 04003893.7
(22) Anmeldetag: 22.04.1995
(51) Int. Cl.: E03D 9/00

(54) **Vorrichtung zur Be- und Entlüftung eines Fäkalienbehälters**

(30) Priorität: 27.04.1994 DE 9406984 U
(62) Teilanmeldung aus: 95106051.6
(71) Anmelder: Dahmann, Werner, 56332 Löf (DE)
(72) Erfinder: Dahmann, Werner, 56332 Löf (DE)
(74) Vertreter: Richardt, Markus, Dipl.-Ing.

(57) **Zusammenfassung**

Die Erfindung betrifft eine Vorrichtung zur Be- und Entlüftung eines Fäkalienbehälters (1), gekennzeichnet durch einen elektrisch betriebenen Absaugventilator (7) zur Absaugung von Gasen aus dem Fäkalienbehälter und zur gleichzeitigen Saugung von Frischluft in den Fäkalienbehälter durch eine Öffnung zur Verbindung des Fäkalienbehälters mit einem Toilettenbecken und mit einem Schalter (4) zum Einschalten des Absaugventilators, wenn durch die Öffnung eine Verbindung des Toilettenbeckens mit dem Fäkalienbehälter hergestellt ist.

## Beschreibung

Die Erfindung betrifft eine Vorrichtung zum Be- und Entlüften von Fäkalienbehältern gemäß dem Oberbegriff des Schutzanspruchs 1.

Der Erfindung zugrunde liegen die Erkenntnisse aus dem Stand der Technik, dass der Zersetzungsprozess von Fäkalien und Toilettenpapier in Fäkalienbehältern, durch die vermehrte Zufuhr von Sauerstoff derart beschleunigt wird, dass sich der Zusatz von jegliche zersetzungsfördernden, chemischen Stoffen erübrigt.

Der Verzicht auf die vorzugsweise chemischen Zusätze, welche unter anderem den Geruch der entstehenden Gase während des Zersetzungsprozesses überdecken, hat allerdings den Nachteil einer erhöhten Geruchsbelästigung nach Öffnen der Tankzuführung, z. B. während der Nutzung, wobei die direkte Verbindung zwischen dem Toilettenbecken und dem Behälter ständig geöffnet ist.

Aus der EP-A0552411 ist eine Toilettenvorrichtung bekannt, welche in einem Toilettenwagen befestigt ist, und sich oberhalb eines entnehmbaren Fäkalienbehälters befindet. Die Toilettenvorrichtung weist an ihrem unteren Ende eine Verbindungsöffnung zu einem Fäkalienbehälter auf, um einen Transport der Fäkalien bei der Benutzung zum Fäkalienbehälter zu ermöglichen. Um anschließend ein Leeren des Fäkalienbehälters zu erlauben, ohne dass der Inhalt während des Transports zu einer Entleerungsstation herausläuft, ist ein Schieberventil vorgesehen, was vor der Herausnahme des Fäkalienbehälters geschlossen werden kann. Derartige Toilettenvorrichtungen haben den Nachteil, dass während des Gebrauchs die Verbindung vom Toilettenbecken zum Fäkalientank weit geöffnet sein muss. Während des Gebrauchszeitraums können dann die Gase bei einem teilgefüllten Fäkalientank in das Toilettenbecken und damit nach außen entweichen, was zu einer Geruchsbelästigung für den Benutzer führt. Um den Geruch zu überdecken, müssen hier bei dem Fäkalientank geruchsüberdeckende Flüssigkeiten zugeführt werden, die üblicherweise antibakteriell wirkende Zusätze aufweisen und gleichzeitig als Spülflüssigkeit dienen.

Aus dem Stand der Technik DE-A 2154652 ist ein weiteres so genanntes Spülklosett bekannt mit einem annähernd senkrechten Auslassrohr, das an seinem oberen Ende mit einem schaltbaren Sperrorgan versehen und an seinem unteren Ende mit einem Fallrohr verbunden ist, einer Klosettschüssel, die über dem Sperrorgan am oberen Ende des Auslassrohrs endet, eine Spülvorrichtung aufweist und bei offenem Sperrorgan in das Auslassrohr und bei verschlossenem Sperrorgan in einen Tank entleerbar ist, und einer vorzugsweise elektrisch betätigte Pumpe zur Förderung von Spülflüssigkeit aus dem Tank über die Spülvorrichtung in die Klosettschüssel aufweist. Dadurch soll ein Spülklosett geschaffen werden, das den Vorteil aufweist, dass bei jedem Spülvorgang nur eine kleine Flüssigkeitsmenge zu verlieren und trotzdem eine Verschmutzung des Spülflüssigkeitstanks vermieden werden kann. Zusätzlich weist dieses Spülklosett ein Gebläse auf, welches im Auslassrohr einen Unterdruck zu erzeugen vermag. Hierdurch wird der aufsteigende Geruch auch aus der angeschlossenen Kanalisation unterbunden bzw. nach außen abgesaugt.

Aus dem Stand der Technik DE-OS 4311066 ist es des Weiteren bekannt, einen elektromotorisch angetriebenen Absaugventilator zur Luftabsaugung, direkt aus dem Toilettenbecken, zur Anwendung zu bringen. Der Absaugventilator sitzt dabei in einer geschlossenen Absaugleitung, die mit dem Austrittsende an das vom Toilettenbecken abgehende Wasserrohr anschließbar ist. Das Eintrittsende der Absaugleitung dagegen ist direkt an die Wasserspülleitung des Toilettenbeckens angeschlossen.

Diese Lösung hat allerdings nur die Aufgabe, die Geruchsbelästigung innerhalb des Toilettenbeckens zu beheben.

Bei einer weiteren Absaugvorrichtung aus dem Stand der Technik DE-OS 2547496 bzw. DE-OS 3049962, ist der Antriebsmotor mit Absaugventilator mit seinem Austrittsende an einen separaten Abluftkanal angeschlossen, welcher nach draußen führt. Derartige Absaugvorrichtungen benötigen besondere Abluftkanäle im Bereich des Toilettenbeckens und bauen somit sehr komplex bzw. benötigen oft einen entsprechend großen Bauraum.

Die Erfindung hat dagegen die Aufgabe, die Nachteile des Zusatzes umweltverschmutzender, Kläranlagen stark belastender Chemikalien und die beim Öffnen der Tankzufuhr entstehende Geruchsbelästigung zu vermeiden.

Die Aufgabe wird dadurch gelöst, dass die im Fäkalientank entstandenen Gase nach außen abgesaugt werden, wodurch gleichzeitig sauerstoffreiche Frischluft über die Einlassöffnung des Tanks eingesaugt wird und zusätzlich eine ständig geöffnete Verbindung des Fäkalientanks zur Außenluft besteht.

Diese Lösung wird erfindungsgemäß durch die Merkmale des Patentanspruchs 1 definiert.

Es wird also eine Absaugvorrichtung geschaffen, die in der Lage ist mit Hilfe eines elektrischen Absaugventilators, welcher vorzugsweise mit dem Ausflussrohr des Fäkalientanks verbunden ist, die Gase im Fäkalienbehälter nach außen zu leiten.

Eine Weiterentwicklung der Erfindung sieht vor, mit Hilfe eines elektrischen Lüfters, welcher mit einem im Fahrzeug oder Wohnwagen fest eingebauten Rohr bzw. Schlauch in Verbindung mit einer zusätzlichen Öffnung am Fäkalientank verbunden ist, die Gase im Fäkalienbehälter nach außen zu leiten.

Eine zweite Weiterentwicklung der Erfindung sieht vor, dass die Absaugung automatisch durch das Öffnen des Behälters oder das Öffnen des WC-Deckels zugeschaltet wird.

Weitere Einzelheiten und Vorteile der erfindungsgemäßen Absaugvorrichtung ergeben sich auch den Unteransprüchen sowie aus der nach nachfolgenden Beschreibung.
- Fig. 1: zeigt die Draufsicht auf die Applikation der Erfindung an den Fäkalienbehälter.
- Fig. 2: zeigt die Anbringung des Absauglüfters an z. B. die außen liegende Serviceklappe eines Wohnmobils/-wagens oder Caravans und den eingeschobenen Fäkalienbehälter.
- Fig. 3: zeigt die Anbringung eines abnehmbaren Gummimuffensteckverschlusses als Verbindung von Entleerungsstutzen und Absaugschlauch.
- Fig. 4: zeigt die Anbringung eines integrierten Entlüftungsschiebers an einer zusätzlich angebrachten Öffnung des Fäkalienbehälters.
- Fig. 5: zeigt die Anbringung des Oberteils des Entlüftungsschiebers am Toilettenkörper mit fest installiertem Absaugrohr oder Schlauch.
- Fig. 6: zeigt die Anbringung eines Betriebsschalters am Toilettenkörper, der durch den Öffnungsriegel zur Toilettenbenutzung betätigt wird.

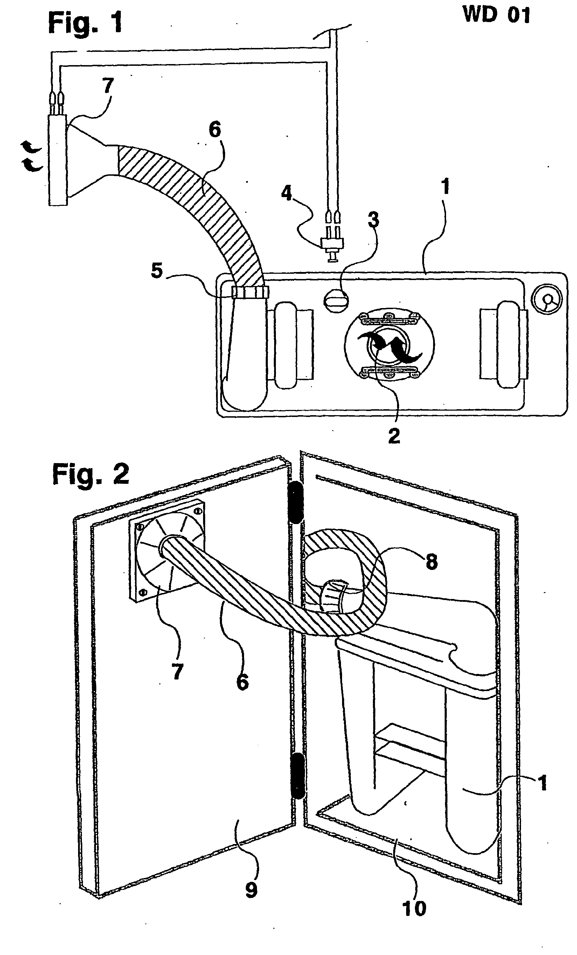

Figur 1 zeigt eine Ansicht einer Ausführungsform der erfindungsgemäßen Vorrichtung. Beim Drehen der Schieberbetätigung 3 wird der Schieber 2 am Fäkalienbehälter 1 geöffnet, wobei gleichzeitig der Kontaktschalter 4 den Absaugventilator 7 einschaltet.

Der Absaugventilator 7 ist durch einen flexiblen Spiralschlauch 6 mit der Verschraubung des Entleerungsstutzens 5 verbunden und saugt über diesen die entstandenen Gase aus dem Fäkalienbehälter ins Freie. Durch die Absaugung der Gase wird gleichzeitig über die Öffnung des Schiebers 2 Frischluft in den Fäkalienbehälter gesaugt und somit der Gasaustritt in den Toilettenbeckenbereich verhindert.

Figur 2 zeigt den eingeschobenen Fäkalienbehälter 1 im Servicefach 10. Die Serviceklappe 9 wurde mit einer entsprechenden Öffnung versehen, wodurch der angeschraubte Absaugventilator 7 die Gase ins Freie abführen kann. Der Absaugventilator 7 kann auch an jeder beliebig anderen Stelle befestigt werden, da die Länge des Spiralschlauchs 6 für die Absaugwirkung unbedeutend ist.

Der Spiralschlauch 6 ist mit dem Absaugventilator 7 fest verbunden und an dem Entleerungsverschluss 8 mit einem Bajonettanschluss befestigt. Durch den Bajonettanschluss ist die Verbindung Absaugventilator 7 und Fäkalienbehälter 1 problemlos zu trennen, um den Fäkalienbehälter zu entnehmen und zu entleeren.

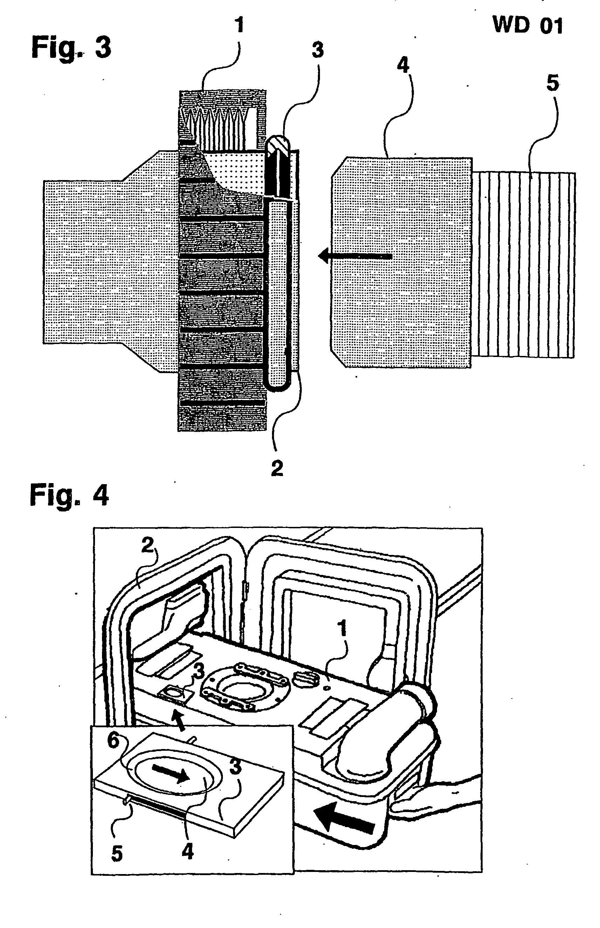

Figur 3 zeigt einen Gummimuffenverschluss, bei dem die Muffe 2 fest mit dem Entleerungsschraubverschluss 1 verbunden ist.

In der Muffe 2 ist ein doppellippiger Dichtring 3 vorhanden, der die Einschiebhülse 4 verbunden mit dem Absaugschlauch 5 nach beiden Seiten abdichtet und die Hülse 4 gleichzeitig festklemmt.

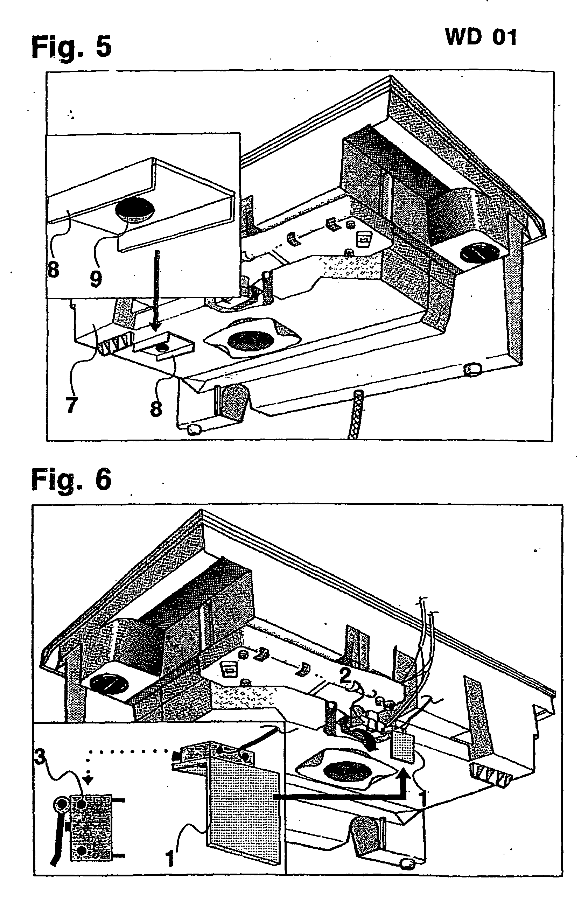

Figur 4 zeigt das integrierte Entlüftungsschiebergehäuse 3 an einer zusätzlichen Öffnung am Fäkalienbehälter 1.

Beim Einschieben des Fäkalienbehälters 1 ins Servicefach 2 wird das Entlüfterschiebergehäuse 3 in das Führungsoberteil 8 in Fig. 5 eingeschoben. Hierbei wird der durch Federn eingeschlossene Schieber 4 in Fig. 4 durch die an ihm befestigten Öffnungsstifte 5 aufgeschoben.

Figur 5 zeigt das Führungsoberteil 8 des Schiebergehäuses 3 in Fig. 4 fest verbundene mit dem Toilettenkörper 7 in Fig. 5. Am Führungsoberteil 8 befindet sich das Ansaugrohr bzw. der Abzugsschlauch 9. Ist das Entlüfterschiebergehäuse 3 in Fig. 4 in das Führungsoberteil 8 in Fig. 5 eingeschoben, schließen die am Schieber 4 entstandene Öffnung und die Kaminöffnung 9 genau miteinander ab. Der in das Entlüftungsschiebergehäuse 3 in Fig. 4 eingearbeitete Dichtring 6 dichtet die entstandene Verbindung ab. In dem Entlüftungskamin 9 in Fig. 5 befindet sich ein elektrisch betriebener Absaugventilator, der entstandene Gase aus dem Fäkalienbehälter absaugt.

Eine weitere Möglichkeit wäre, den Schieber durch ein Ventil zu ersetzen.

Fig. 6 beschreibt den Betriebsschalter 3 am Öffnungsriegel 2. Der Betriebsschalter 3 ist vorzugsweise auf einem Aluminiumwinkel 1 befestigt. Dieser wird in unmittelbarer Nähe des Öffnungsriegels 2 am Servicefach installiert, sodass das Kontaktteil des Betriebsschalters 3 am Öffnungsriegel 2 anliegt. Beim Verdrehen des Öffnungsriegels 2 wird der Betriebsschalter 3 betätigt und der Absaugventilator eingeschaltet.

## Patentansprüche

1. Vorrichtung zur Be- und Entlüftung eines Fäkalienbehälters (1), **gekennzeichnet durch** einen elektrisch betriebenen Absaugventilator (7) zur Absaugung von Gasen aus dem Fäkalienbehälter und zur gleichzeitigen Saugung von Frischluft in den Fäkalienbehälter **durch** eine Öffnung zur Verbindung des Fäkalienbehälters mit einem Toilettenbecken und mit einem Schalter (4) zum Einschalten des Absaugventilators, wenn **durch** die Öffnung eine Verbindung des Toilettenbeckens mit dem Fäkalienbehälter hergestellt ist.

2. Vorrichtung nach Anspruch 1, mit einer zusätzlich ständig geöffneten Verbindung des Fäkalienbehälters zur Außenumgebung, wobei der Absaugventilator automatisch mit der Öffnung eines Schiebers (2) am Fäkalienbehälter (1) durch den Schalter in Funktion gesetzt wird, und der Absaugventilator an einem Durchbruch an einer Service klappe (9) und/oder an einer Fahrzeugwand bzw. Fahrzeugdach befestigt ist.

3. Vorrichtung nach Anspruch 1 oder 2, wobei der Absaugventilator über die Verbindungsleitung (6) mit einem abnehmbaren Anschluss (5) am Fäkalienbehälterausgang verbunden ist.

4. Vorrichtung nach einem der vorhergehenden Ansprüche 1, 2 oder 3, wobei ein Fäkalienbehälterausgang (44) als eine Öffnung im Fäkalienbehälter (1) mit fest installiertem, dem Fäkalienbehälterausgang (44) im herausgezogenen Zustand verschließenden Schieber ausgebildet ist, der im eingeschobenen Zustand den Fäkalienbehälterausgang (44) automatisch leitend mit einem fest installierten Kamin koppelt.

5. Vorrichtung nach einem der vorhergehenden Ansprüche, wobei der Schalter im Gehäuse eines Öffnungsriegels (2) integriert ist.

6. Vorrichtung nach einem der vorhergehenden Ansprüche, wobei der Schalter durch den Öffnungsriegel betätigbar ist.

7. Vorrichtung nach einem der vorhergehenden Ansprüche, wobei der Absaugventilator über die Verbindungsleitung (6) mit einem abnehmbaren Anschluss am Behälterausgang (5) verbindbar ist.

8. Vorrichtung nach einem der vorhergehenden Ansprüche, wobei ein fest installierter Schieber bzw. ein Ventil zum automatischen Öffnen bzw. Schließen beim Einschieben - bzw. Herausnehmen des Fäkalienbehälters ausgebildet ist.

9. Vorrichtung nach einem der vorhergehenden Ansprüche für ein Wohnmobil, einen Wohnwagen oder Caravan.
